# EUROPÄISCHE PATENTSCHRIFT

(11) **EP 3 260 399 B1**
(45) Veröffentlichungstag und Bekanntmachung des Hinweises auf die Patenterteilung: **22.09.2021**
(21) Anmeldenummer: 17175487.2
(22) Anmeldetag: 12.06.2017
(51) Int. Cl.: B65G 47/90, B25J 15/00, B25J 9/00, B65G 47/26

(54) **GREIFVORRICHTUNG ZUM ERFASSEN MEHRERER STÜCKGÜTER, SYSTEM ZUM UMGANG MIT MEHREREN STÜCKGÜTERN UND VERFAHREN ZUM MANIPULIEREN MEHRERER STÜCKGÜTER**
GRIPPER DEVICE FOR THE GRASPING OF A PLURALITY OF ARTICLES, HANDLING SYSTEM WITH MULTIPLE PIECE GOODS AND METHOD FOR MANIPULATING A PLURALITY OF PIECE GOODS
DISPOSITIF DE PRÉHENSION DESTINÉ À SAISIR PLUSIEURS MARCHANDISES, SYSTÈME DE MANIEMENT DE PLUSIEURS MARCHANDISES ET PROCÉDÉ DE MANIPULATION DE PLUSIEURS MARCHANDISES

(30) Priorität: 22.06.2016 DE 102016211187
(43) Veröffentlichungstag der Anmeldung: 27.12.2017
(73) Patentinhaber: Krones Aktiengesellschaft, 93073 Neutraubling (DE)
(72) Erfinder: WESTERMEIER, Christian, 93073 Neutraubling (DE); UNTERSEHER, Josef, 93073 Neutraubling (DE)
(74) Vertreter: Benninger, Johannes

(56) Entgegenhaltungen:
- EP-A1- 2 719 506
- CN-A- 101 774 173
- CN-A- 102 717 382
- DE-A1-102014 223 389
- DE-B- 1 214 368
- DE-U1- 20 100 888
- JP-A- S6 393 585
- JP-A- H04 310 389
- JP-U- H0 252 892
- US-A1- 2008 181 757

## Beschreibung

Die vorliegende Erfindung betrifft eine Greifvorrichtung zum Erfassen mehrerer Stückgüter mit mindestens zwei Greifeinheiten, ein System zum Umgang mit mehreren Stückgütern und ein Verfahren zum Manipulieren mehrerer Stückgüter über eine Greifvorrichtung mit mindestens zwei Greifeinheiten.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge und beabstandet zu einer Handhabungseinrichtung befördert werden. Dort erfolgt eine Verschiebung, Ausrichtung und/oder ein Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

Bekannte Handhabungseinrichtungen, welche eine solche Verschiebung, Ausrichtung und/oder ein solches Drehen einzelner Stückgüter oder Gebinde bewirken, können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können in weiteren bekannten Ausführungsformen auch an Mehrachsroboterarmen angeordnet sein, die seitlich an den Horizontalfördereinrichtungen platziert sind. Derartige Greifvorrichtungen sind etwa aus der EP 2 388 216 A1 bekannt. Die in der EP-Patentanmeldung offenbarte Greifvorrichtung besitzt zwei sich gegenüberliegende Greifmittel, die zum Entgegennehmen von Stückgütern zugestellt werden können. Setzt die Greifvorrichtung ungewollt auf eine Bodenfläche auf, so können sich die zwei gegenüberliegenden Greifmittel von einem Träger lösen, womit Beschädigungen der Greifvorrichtung entgegengewirkt werden soll.

Zudem offenbart die DE 201 00 888 U1 eine Handhabungseinrichtung zum Handhaben von Getränkekisten. Die Handhabungseinrichtung weist ein erstes Paar von Greifhaken zum Eingreifen in eine am jeweiligen Getränkekasten gebildete Öffnung auf. Ein Greifhaken ist hierbei an einem unteren Trumm eines Riemens festgelegt, wobei ein weiterer Greifhaken an einem oberen Trumm des Riemens festgelegt ist.

Die DE 12 14 368 B offenbart einen Greifer zum Aufnehmen von keramischen Formlingen. Der Greifer verfügt über Greiferarme, welche für das Festklemmen und anschließende Hochheben von keramischen Formlingen gegenläufig bewegt werden. Hierzu sind die Greiferarme an Stangen befestigt, welche zum Festklemmen von Formlingen relativ zueinander bewegt werden.

Weiter offenbart die JPH04310389 A eine Greifeinrichtung zur Handhabung von Wafern. Führungsschienen sind auf einem Rahmen angeordnet und zwei Paare an Armen werden über die Führungsschienen gehalten bzw. geführt, so dass die Arme eine Zustellbewegung ausführen können.

Die JPH 0252892 U offenbart eine Greifeinrichtung, die an einer Zimmerdecke angeordnet werden kann. Es sind mehrere Arme vorgesehen, die eine Zustellbewegung ausführen können.

Eine weitere Greifvorrichtung ist beispielsweise aus der DE 102 04 513 A1 bekannt. Die in der DE-Anmeldung offenbarte Greifvorrichtung umfasst zwei Greifarme zum Greifen von Gegenständen. Einer der beiden Greifarme ist mit einem Fahrzeug verbindbar. Der weitere Greifarm dient zum Öffnen und Schließen der Greifvorrichtung über ein Stellglied.

Die CN 102717382 A schließlich offenbart eine Greifvorrichtung nach dem Oberbegriff des Anspruchs 1, und ein Verfahren nach dem Oberbegriff des Anspruchs 7. Das Dokument zeigt eine Greifvorrichtung mit zwei hintereinander parallel angeordneten und über einen Riemen verbundenen Tragbalken, an welchen jeweils eine Hälfte von Greifarmen derart angebracht sind, dass durch Parallelverschiebung der Tragbalken eine Zustellbewegung der Greifarme ausgelöst wird.

Die Praxis hat gezeigt, dass bei aufeinanderfolgenden Prozessen Artikel mit unterschiedlichen relativen Abständen bzw. Teilungsabständen zueinander in den Arbeitsbereich der Greifvorrichtung gelangen können. Bei bisher bekannten Handhabungseinrichtungen muss bis dato die vollständige Greifvorrichtung ausgetauscht werden, um unter Berücksichtigung des neuen relativen Abstandes Artikel gezielt erfassen zu können. Auch bei aufeinanderfolgenden Prozessen, bei welchen Artikel unterschiedliche Geometrien bzw. Dimensionierungen besitzen, ist eine Anpassung der jeweiligen Handhabungseinrichtung mit einem vollständigen Austausch der Greifvorrichtung verbunden.

Eine Aufgabe der Erfindung kann daher darin gesehen werden, eine gattungsgemäße Greifvorrichtung bzw. ein gattungsgemäßes System sowie Verfahren zur Verfügung zu stellen, welche eine hohe Flexibilität bei einer Zuführung von Artikeln mit unterschiedlichen relativen Abständen zueinander und/oder unterschiedlichen Geometrien besitzen. Die Greifvorrichtung und das System sollen einen unkomplizierten Aufbau besitzen. Weiterhin soll das Verfahren einfach umgesetzt werden können.

Diese Aufgaben werden durch eine Greifvorrichtung, ein System und ein Verfahren gelöst, welche die Merkmale in den Schutzansprüchen 1, 5 und 7 umfassen. Weitere vorteilhafte Ausgestaltungen werden durch die Unteransprüche beschrieben.

Die Erfindung betrifft eine Greifvorrichtung zum Erfassen mehrerer Stückgüter. Die Stückgüter, welche mittels der Greifvorrichtung erfassbar sind, können beispielsweise durch Getränkebehältnisse bzw. durch mehrere zu einem Gebinde zusammengefasste Getränkebehältnisse ausgebildet sein.

Die Greifvorrichtung umfasst mindestens zwei Greifeinheiten. Die mindestens zwei Greifeinheiten besitzen jeweils ein erstes Greifmittel und ein dem jeweiligen ersten Greifmittel gegenüberliegendes zweites Greifmittel, welches jeweilige erste Greifmittel mit dem jeweiligen zweiten Greifmittel zum klemmenden und/oder formschlüssigen Erfassen eines jeweiligen Stückgutes zusammenwirkt. In denkbaren Ausführungsformen kann die Greifvorrichtung auch mehr als zwei Greifeinheiten besitzen. Beispielsweise kann es sein, dass die Greifvorrichtung drei Greifeinheiten besitzt, die jeweils ein erstes Greifmittel und ein dem jeweiligen ersten Greifmittels gegenüberliegendes zweites Greifmittel besitzen, wobei ein erstes Greifmittel und ein dem jeweiligen ersten Greifmittel gegenüberliegendes zweites Greifmittels zum Erfassen eines jeweiligen Stückgutes zusammenwirken.

Die ersten Greifmittel und die zweiten Greifmittel können im Bereich ihres freien Endes einen Kontaktbereich für Stückgüter ausbilden. Bei klemmender und/oder formschlüssiger Erfassung eines jeweiligen Stückgutes kann das jeweilige Stückgut mit einem Kontaktbereich eines ersten Greifmittels und einem Kontaktbereich eines jeweiligen dem ersten Greifmittel gegenüberliegenden zweiten Greifmittels in Anlage geraten. Der jeweilige Kontaktbereich kann elastisch nachgiebig ausgebildet sein. Demnach kann mindestens ein erstes Greifmittel und/oder mindestens ein zweites Greifmittel im Kontaktbereich wenigstens eine durch Gummi oder weitere elastische nachgiebige Materialen ausgebildete Anlage aufweisen.

Um Stückgüter gezielt entgegennehmen zu können, haben sich Ausführungsformen bewährt, bei welchen die ersten Greifmittel und die zweiten Greifmittel in Richtung eines jeweiligen entgegenzunehmenden Stückgutes bzw. in Richtung des jeweiligen gegenüberliegenden Greifmittels geneigt orientiert sind.

Weiter ist vorgesehen, dass die ersten Greifmittel der mindestens zwei Greifeinheiten und die zweiten Greifmittel der mindestens zwei Greifeinheiten für eine gemeinsame Zustellbewegung mechanisch miteinander bewegungsgekoppelt sind. Eine Bewegung eines ersten Greifmittels einer ersten Greifeinheit kann hierdurch mit einer zeitsynchronen Bewegung eines ersten Greifmittels einer zweiten Greifeinheit einhergehen. Die ersten Greifmittel können somit starr bzw. im Wesentlichen starr miteinander bewegungsgekoppelt sein. Ebenso können daher die zweiten Greifmittel starr bzw. im Wesentlichen starr miteinander bewegungsgekoppelt sein. Eine solche mechanische Bewegungskoppelung erlaubt eine hohe Flexibilität bei Entgegennahme bzw. Erfassung von Stückgütern in aufeinanderfolgenden Prozessen mit unterschiedlichen Teilungsabständen. Weiterhin können in aufeinanderfolgenden Prozessen Stückgüter mit unterschiedlichen Geometrien bzw. Dimensionierungen mittels der Greifvorrichtung ohne aufwendige Umrüstungsarbeiten einfach und unkompliziert entgegengenommen und ggf. manipuliert werden.

Denkbar ist zudem, dass die Greifvorrichtung eine Aufhängung bzw. eine gemeinsame Aufhängung umfasst, an welcher die mindestens zwei Greifeinheiten verfahrbar angeordnet sind. Demnach können die mindestens zwei Greifeinheiten bzw. die ersten Greifmittel und/oder die zweiten Greifmittel der mindestens zwei Greifeinheiten bei ihrer jeweiligen Zustellbewegung relativ zur Aufhängung verfahren werden. Die mindestens zwei Greifeinheiten können somit von der Aufhängung bzw. von der gemeinsamen Aufhängung getragen werden. Über die Aufhängung kann die Greifvorrichtung ggf. mit einer nachfolgend noch beschriebenen Handhabungseinrichtung in Verbindung stehen. Die Aufhängung kann daher einen Flansch bzw. eine Koppelung für die nachfolgend noch beschriebene Handhabungseinrichtung bereitstellen. Bei Bewegung der Greifvorrichtung kann eine Längsachse der Aufhängung eine zumindest näherungsweise horizontale Orientierung besitzen.

Weiter sind die ersten Greifmittel der mindestens zwei Greifeinheiten an einem gemeinsamen ersten Schlitten und die zweiten Greifmittel der mindestens zwei Greifeinheiten an einem gemeinsamen zweiten Schlitten festgesetzt, welcher erste Schlitten und welcher zweite Schlitten mit einer Linearführung in Verbindung stehen. Der erste Schlitten und der zweite Schlitten können daher ggf. unabhängig voneinander entlang der Linearführung bewegbar sein. Somit können der erste Schlitten und der zweite Schlitten entlang der Linearführung parallel zueinander und ggf. jeweils horizontal bewegbar sein. Eine Bewegungsrichtung des ersten Schlittens ist fluchtend zu einer Bewegungsrichtung des zweiten Schlittens orientiert.

Außerdem umfasst die Greifvorrichtung wenigstens ein insbesondere als Riemen ausgebildetes umlaufend geführtes Stellglied, an welches der erste Schlitten und der zweite Schlitten für die jeweilige Zustellbewegung mechanisch gekoppelt sind. Das wenigstens eine umlaufend geführte Stellglied kann somit durch mindestens einen Riemen ausgebildet sein. Denkbar ist auch, dass das wenigstens eine umlaufend geführte Stellglied als Kettentrieb ausgebildet ist.

Weiter kann die Greifvorrichtung eine Umlenkrolle und eine Antriebsrolle umfassen, um welche das wenigstens eine Stellglied umlaufend geführt ist. Die Umlenkrolle kann eine Drehachse besitzen, die Antriebswelle eine Rotationsachse, wobei die Drehachse und die Rotationsachse parallel zueinander orientiert sind.

Die Antriebsrolle kann mit einem Aktor in Verbindung stehen bzw. von der nachfolgend noch beschriebenen Handhabungseinrichtung rotierend angetrieben werden. Ein Aktor der Handhabungseinrichtung kann die Antriebsrolle für eine Zustellbewegung der ersten Greifmittel und/oder der zweiten Greifmittel hierzu rotierend bewegen. Die Umlenkrolle und/oder die Antriebsrolle können an der bereits erwähnten Aufhängung befestigt bzw. gelagert sein. Der wenigstens eine Aktor kann mindestens einen Servomotor zum Antrieb des wenigstens einen Stellgliedes bzw. zum Rotieren der Antriebsrolle umfassen. Ebenso kann der Aktor bzw. der Servomotor auf der Aufhängung aufsitzen bzw. an der Aufhängung festgesetzt sein. Das wenigstens eine umlaufend geführte Stellglied bzw. der wenigstens eine Riemen kann parallel zur Längserstreckung der Aufhängung und/oder parallel zu einer Bewegungsrichtung des ersten Schlittens und/oder des zweiten Schlittens verlaufen. Demnach kann sich das wenigstens eine Stellglied bzw. der wenigstens eine Riemen parallel zur Führungsrichtung der Linearführung erstrecken.

Zudem ist vorstellbar, dass die Greifvorrichtung ein bestimmtes insbesondere als Riemen ausgebildetes umlaufend geführtes Stellglied umfasst, an welches sowohl der erste Schlitten als auch der zweite Schlitten für die jeweilige Zustellbewegung jeweils mechanisch gekoppelt sind. Auch hierbei kann es sein, dass die Greifvorrichtung eine Umlenkrolle und eine Antriebsrolle umfasst, um welche das wenigstens eine bestimmte Stellglied bzw. der bestimmte Riemen umlaufend geführt ist. Die Antriebsrolle kann, wie vorhergehend bereits beschrieben, weiterhin mit einem Aktor in Verbindung stehen bzw. einen Flansch zur Verbindung mit einem Aktor bzw. zur Verbindung mit einer Handhabungseinrichtung bereitstellen. Der erste Schlitten und der zweite Schlitten können über das bestimmte insbesondere als Riemen ausgebildete umlaufend geführte Stellglied miteinander bewegungsgekoppelt sein. Insbesondere kann für den ersten Schlitten eine Klemmverbindung vorgesehen sein, mittels welcher der erste Schlitten an das bestimmte insbesondere als Riemen ausgebildete umlaufend geführte Stellglied gekoppelt ist. Auch kann für den zweiten Schlitten eine Klemmverbindung vorgesehen sein, mittels welcher der zweite Schlitten an das bestimmte insbesondere als Riemen ausgebildete umlaufend geführte Stellglied gekoppelt ist. Der erste Schlitten und der zweite Schlitten können insbesondere mittels einer jeweiligen Klemmverbindung auf gegenüberliegenden Seiten an das bestimmte insbesondere als Riemen ausgebildete umlaufend geführte Stellglied mechanisch gekoppelt sein.

Ausführungsformen mit einem bestimmten Stellglied, an welches sowohl der erste Schlitten als auch der zweite Schlitten für die jeweilige Zustellbewegung mechanisch gekoppelt sind, haben sich bewährt, um auf einfache und unkomplizierte Art und Weise und mit geringem konstruktiven Aufwand eine Zustellbewegung für erste und zweite Greifmittel mindestens zweier Greifeinheiten zu ermöglichen. Das bestimmte Stellglied bzw. der bestimmte Riemen kann sich zu weniger als zwei Drittel entlang der Längserstreckung der Aufhängung erstrecken. Werden die ersten Greifmittel und die zweiten Greifmittel der mindestens zwei Greifeinheiten zugestellt, so können der erste Schlitten und der zweite Schlitten in Richtung zueinander verfahren werden.

Zudem kann vorgesehen sein, dass die ersten Greifmittel des ersten Schlittens selektiv in wenigstens zwei unterschiedlichen relativen Beabstandungen zueinander am ersten Schlitten festsetzbar sind und/oder dass die zweiten Greifmittel des zweiten Schlittens selektiv in wenigstens zwei unterschiedlichen relativen Beabstandungen zueinander am zweiten Schlitten festsetzbar sind. Somit kann wenigstens ein erstes Greifmittel und/oder wenigstens ein zweites Greifmittel abnehmbar am jeweiligen Schlitten festgesetzt sein. Beispielsweise kann die Greifvorrichtung Rast- und/oder Schnapp- und/oder Klemmverbindungen umfassen, um das wenigstens eine erste Greifmittel und/oder das wenigstens eine zweite Greifmittel abnehmbar und in der jeweiligen relativen Beabstandung zum weiteren ersten bzw. zweiten Greifmittel abnehmbar am jeweiligen Schlitten festzusetzen. Der erste Schlitten und/oder der zweite Schlitten können ggf. mehrere bestimmte Positionen bereitstellen, um die ersten Greifmittel bzw. die zweiten Greifmittel in einer gewünschten jeweiligen relativen Beabstandung zueinander am jeweiligen ersten Schlitten bzw. zweiten Schlitten festzusetzen.

Die Erfindung betrifft darüber hinaus ein System zum Umgang mit Stückgütern. Das System umfasst eine Handhabungseinrichtung mit einer Greifvorrichtung gemäß vorheriger Beschreibung. Weiter umfasst das System mindestens eine Transporteinrichtung, mittels welcher eine Vielzahl an Stückgütern einem Arbeitsbereich der Handhabungseinrichtung zuführbar sind und aus dem Arbeitsbereich der Handhabungseinrichtung bewegbar sind. Auch umfasst das System eine Steuerungseinheit, über welche die Handhabungseinrichtung zum Erfassen und Manipulieren von Stückgütern unter Zuhilfenahme ihrer Greifvorrichtung ansteuerbar ist.

Insbesondere kann es sein, dass die Handhabungseinrichtung hierbei als Deltakinematik-Roboter ausgebildet ist. Darüber hinaus kann für weitere Ausführungsformen vorgesehen sein, dass die Handhabungseinrichtung als Mehrachsroboter ausgebildet ist. Auch ist vorstellbar, dass die Handhabungseinrichtung als Portalsystem ausgebildet ist, mittels dessen die Greifvorrichtung zum Manipulieren von Stückgütern verfahren werden kann. In denkbaren Ausführungsformen kann das System eine Handhabungseinrichtung umfassen. Vorstellbar ist jedoch auch, dass das System mehrere Handhabungseinrichtungen mit einer jeweiligen Greifvorrichtung und/oder eine Handhabungseinrichtung mit mehreren Greifvorrichtungen umfasst, wobei die mehreren Handhabungseinrichtungen bzw. die mehreren Greifvorrichtungen zum Manipulieren von Stückgütern zusammenwirken bzw. miteinander in Wirkverbindung stehen. Das System kann als Dreh- und Verteilsystem für Stückgüter ausgebildet sein. Weiter kann es sein, dass das System zum Herstellen einer palettierfähigen Lage aus einer Vielzahl an Stückgütern oder zum Herstellen einer Vorgruppierung für eine palettierfähige Lage aus einer Vielzahl an Stückgütern ausgebildet ist.

Die Erfindung betrifft darüber hinaus ein Verfahren zum Manipulieren mehrerer Stückgüter über eine Greifvorrichtung mit mindestens zwei Greifeinheiten. Merkmale, welche vorhergehend bereits zur Greifvorrichtung bzw. zum System beschrieben wurden, können ebenso bei nachfolgend beschriebenem Verfahren vorgesehen sein und werden daher nicht redundant erwähnt. Zudem können nachfolgend beschriebene Merkmale, welche das Verfahren betreffen, für diverse Ausführungsformen der Greifvorrichtung bzw. des Systems vorgesehen sein.

Auch im Rahmen des erfindungsgemäßen Verfahrens umfassen die mindestens zwei Greifeinheiten jeweils ein erste Greifmittel und jeweils ein dem jeweiligen ersten Greifmittel gegenüberliegendes zweites Greifmittel. Das Verfahren umfasst folgende Schritte:
- Bewegen der Greifvorrichtung zusammen mit den mindestens zwei Greifeinheiten in Richtung mehrerer Stückgüter,
- klemmendes und/oder formschlüssiges Erfassen jeweils wenigstens eines eigenen Stückgutes durch die mindestens zwei Greifeinheiten,
- Ausrichten und/oder Positionieren der Stückgüter über die Greifvorrichtung zeitlich nach ihrer klemmenden und/oder formschlüssigen Erfassung.

Zudem ist vorgesehen, dass
- die ersten Greifmittel über eine gemeinsame erste mechanische Koppelung mit einer Zustellbewegung beaufschlagt werden, woraus resultierend die eigenen Stückgüter durch die mindestens zwei Greifeinheiten klemmend und/oder formschlüssig erfasst werden und/oder dass
- die zweiten Greifmittel über eine gemeinsame zweite mechanische Koppelung mit einer Zustellbewegung beaufschlagt werden, woraus resultierend die eigenen Stückgüter durch die mindestens zwei Greifeinheiten klemmend und/oder formschlüssig erfasst werden.

Die erste mechanische Koppelung umfasst einen ersten Schlitten und die zweite mechanische Koppelung umfasst einen zweiten Schlitten, wobei der erste Schlitten und der zweite Schlitten zum bzw. bei Ausführen der jeweiligen Zustellbewegung entlang wenigstens einer Linearführung bewegt werden. Der erste Schlitten und der zweite Schlitten können hierbei parallel zueinander bewegt bzw. verfahren werden.

Weiter sind der erste Schlitten und der zweite Schlitten an wenigstens einem vorzugsweise als Riemen ausgebildeten umlaufend geführten Stellglied befestigt, wobei der erste Schlitten und der zweite Schlitten zum Ausführen der jeweiligen Zustellbewegung über das wenigstens eine Stellglied entlang der wenigstens einen Linearführung bewegt werden. Insbesondere können der erste Schlitten und der zweite Schlitten an einem gemeinsamen bestimmten vorzugsweise als Riemen ausgebildeten umlaufend geführten Stellglied befestigt sein. Das vorzugsweise als Riemen ausgebildete umlaufend geführte bestimmte Stellglied kann angetrieben werden, woraus resultierend die ersten Greifmittel und die zweiten Greifmittel zeitsynchron eine Zustellbewegung einleiten. Zum Beenden der Zustellbewegung der ersten Greifmittel und der zweiten Greifmittel kann das vorzugsweise als Riemen ausgebildete umlaufend geführte bestimmte Stellglied angehalten werden. Insbesondere kann das vorzugweise als Riemen ausgebildete umlaufend geführte bestimmte Stellglied aktorisch angetrieben werden.

Denkbar ist zudem, dass zeitlich vor Bewegen der Greifvorrichtung zusammen mit den mindestens zwei Greifeinheiten in Richtung der mehreren Stückgüter
- eine bestimmte relative Beabstandung aus wenigstens zwei relativen Beabstandungen für die ersten Greifmittel ausgewählt und die ersten Greifmittel in der bestimmten ausgewählten relativen Beabstandung am ersten Schlitten festgesetzt werden, welche bestimmte relative Beabstandung die ersten Greifmittel während des klemmenden und/oder formschlüssigen Erfassens und während des Ausrichtens und Positionierens der Stückgüter beibehalten und/oder bei welchem zeitlich vor Bewegen der Greifvorrichtung zusammen mit den mindestens zwei Greifeinheiten in Richtung der mehreren Stückgüter
- eine bestimmte relative Beabstandung aus wenigstens zwei relativen Beabstandungen für die zweiten Greifmittel ausgewählt und die zweiten Greifmittel in der bestimmten ausgewählten relativen Beabstandung am zweiten Schlitten festgesetzt werden, welche bestimmte relative Beabstandung die zweiten Greifmittel während des klemmenden und/oder formschlüssigen Erfassens und während des Ausrichtens und Positionierens der Stückgüter beibehalten.

In der Praxis haben sich zudem Ausführungsformen bewährt, bei welchen der erste Schlitten und der zweite Schlitten beim Ausführen der Zustellbewegung zeitsynchron bewegt werden. Wie vorhergehend bereits erwähnt, kann hierzu eine Bewegung des ersten Schlittens zumindest näherungsweise zeitgleich mit einer Bewegung des zweiten Schlittens beginnen. Weiter kann eine Bewegung des ersten Schlittens zumindest näherungsweise zeitgleich mit einer Bewegung des zweiten Schlittens enden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer denkbaren Ausführungsform für das erfindungsgemäße System;
Fig. 2 zeigt eine schematische Perspektivansicht von schräg unten auf eine erste Ausführungsform einer erfindungsgemäßen Greifvorrichtung;
Fig. 3 zeigt eine schematische Ansicht von unten auf die Ausführungsform einer Greifvorrichtung aus Fig. 2;
Fig. 4 zeigt eine schematische Ansicht von oben auf die Ausführungsform einer Greifvorrichtung aus Figuren 2 und 3;
Fig. 5 zeigt eine schematische Seitenansicht auf die Ausführungsform einer Greifvorrichtung aus den Figuren 2 bis 4;
Fig. 6 zeigt eine weitere schematische Seitenansicht auf die Ausführungsform einer Greifvorrichtung aus den Figuren 2 bis 5;
Fig. 7 zeigt einzelne Schritte, wie sie bei einer denkbaren Ausführungsform des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

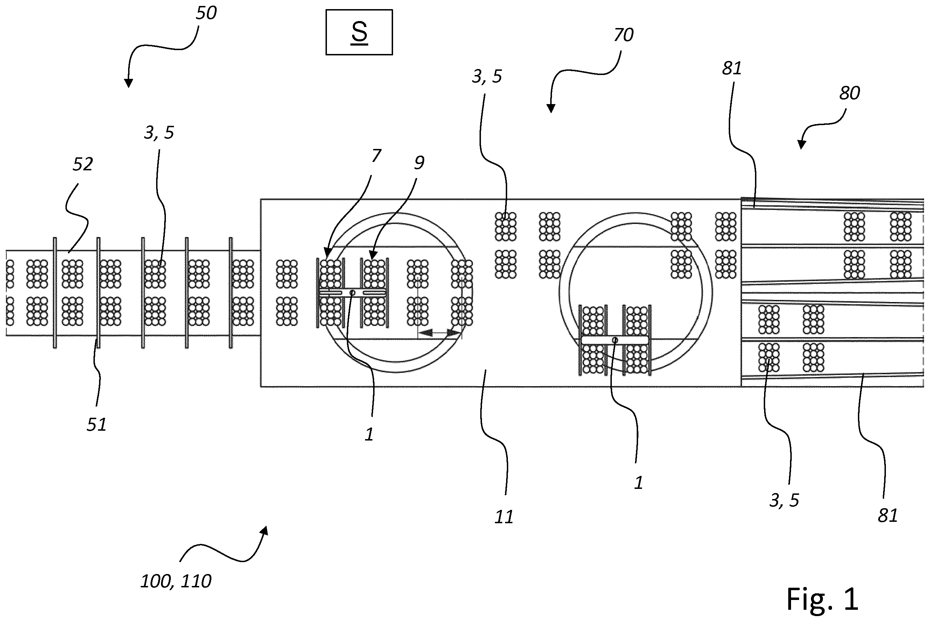

Die Fig. 1 zeigt eine schematische Ansicht einer denkbaren Ausführungsform für das erfindungsgemäße System 100. Das System 100 ist als Verteilsystem 110 ausgebildet und umfasst, wie in Fig. 1 linksseitig zu erkennen, einen Einteiler 50 mit mehreren Schubbalken 51 und einer Horizontalfördereinrichtung 52, auf welcher Horizontalfördereinrichtung 52 als Gebinde 3 mit mehreren Getränkebehältnissen ausgebildete Stückgüter 5 in zwei parallelen Reihen transportiert werden. Die Schubbalken 51 werden zwischen aufeinanderfolgenden Stückgütern 5 positioniert, treten mit jeweils einem Stückgut 5 der beiden parallelen Reihen in Anlage und richten die beiden Stückgüter 5 nebeneinander bzw. senkrecht zur einer Transportrichtung der Horizontalfördereinrichtung 52 fluchtend zueinander aus.

Über die Horizontalfördereinrichtung 52 des Einteilers 50 werden die ausgerichteten bzw. eingeteilten Stückgüter 5 sodann einem Manipulationsbereich 70 zugeführt, welcher dem Einteiler 50 in Transportrichtung der Stückgüter 5 bzw. Gebinde 3 unmittelbar nachgeordnet ist.

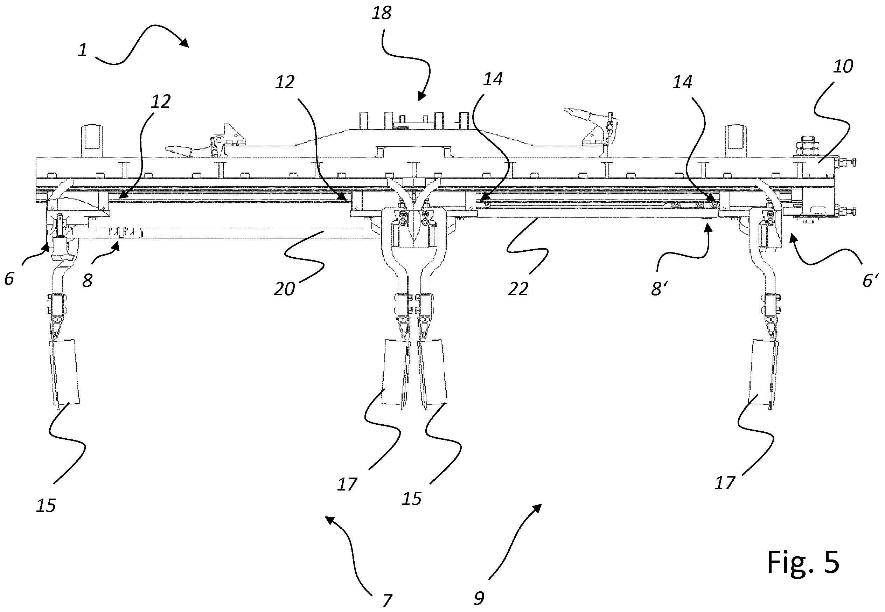

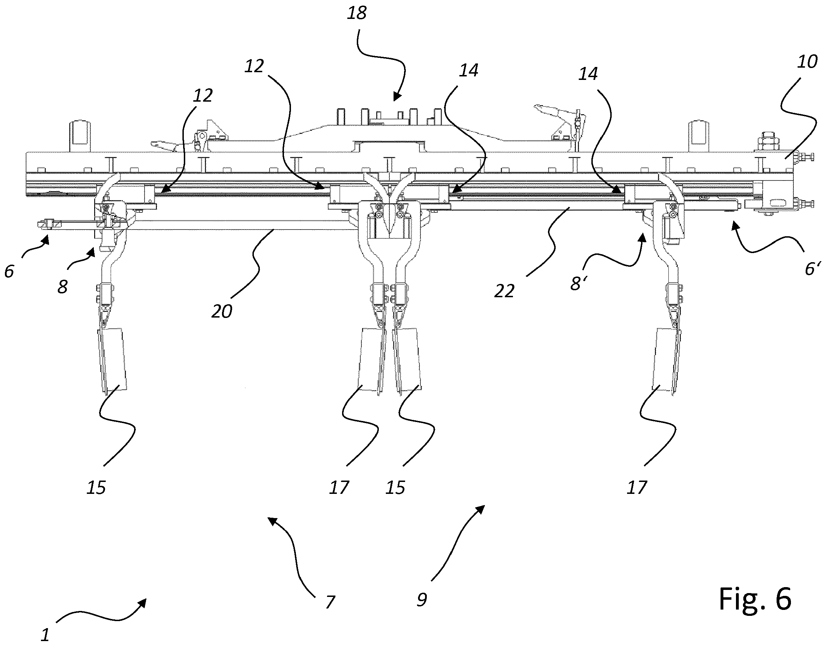

Der Manipulationsbereich 70 verfügt über zwei Greifvorrichtungen 1, die als Bestandteil einer jeweiligen in Fig. 1 nicht mit dargestellten Handhabungseinrichtung ausgebildet sind und mittels der jeweiligen Handhabungseinrichtung verfahren werden können. Die Handhabungseinrichtungen können beispielsweise als Portalsystem oder durch jeweils einen Deltakinematik-Roboter ausgebildet sein. Die Greifvorrichtungen 1 verfügen, wie in nachfolgenden Figuren 5 und 6 detailliert dargestellt und beschrieben, jeweils über zwei Greifeinheiten 7 und 9 mit jeweils einem ersten Greifmittel 15 und jeweils einem dem ersten Greifmittel 15 gegenüberliegenden zweiten Greifmittel 17.

Da aufeinanderfolgende Stückgüter 5, welche in den Manipulationsbereich 70 übergetreten sind, mittels der Greifeinheiten 7 und 9 einer jeweiligen Greifvorrichtung 1 erfasst und hierauf folgend manipuliert werden, müssen die Relativpositionen der Greifeinheiten 7 und 9 bzw. der ersten Greifmittel 15 und der zweiten Greifmittel 17 an die Beabstandungen aufeinanderfolgender Stückgüter 5 angepasst sein, um aufeinanderfolgende Stückgüter 5 mittels der Greifeinheiten 7 und 9 entgegennehmen zu können. In der Praxis wurden hierzu bisher die Greifvorrichtungen 1 ausgetauscht, um einen gezielte Erfassung von mittels des Einteilers 50 relativ zueinander beabstandeten aufeinanderfolgenden Stückgütern 5 gewährleisten zu können. Die Erfindung ermöglicht eine Anpassung der Greifvorrichtung 1 an unterschiedliche Abstände aufeinanderfolgender Stückgüter 5 bzw. Teilungsabstände aufeinanderfolgender Stückgüter 5 ohne vollständigen Austausch der Greifvorrichtungen 1. Auch können mittels der erfindungsgemäßen Greifvorrichtung 1 Stückgüter 5 mit unterschiedlichen Geometrien unter unkomplizierter Anpassung der Greifvorrichtung 1 an die jeweilige Geometrie gezielt erfasst und manipuliert werden.

Die Fig. 1 lässt darüber hinaus erkennen, dass einzelne Stückgüter 5 bzw. Gebinde 3 im Manipulationsbereich 70 mittels der Greifvorrichtungen 1 schräg zu ihrer Bewegungsrichtung versetzt werden. Unmittelbar auf den Manipulationsbereich 70 folgt ein Auslauf 80 mit mehreren Führungsgeländern 81, wobei jeweils unmittelbar benachbarte Führungsgeländer 81 eine Gasse für Stückgüter 5 bzw. für Gebinde 3 ausbilden. Im Manipulationsbereich 70 erfolgt das Versetzen der Stückgüter 5 somit derart, dass die Stückgüter 5 hinsichtlich ihrer Anzahl gleichmäßig auf die zwischen den Führungsgeländern 81 gebildeten Gassen verteilt werden.

Die Handhabungseinrichtungen, welche die Greifvorrichtungen 1 zum Versetzen bzw. Verteilen der Stückgüter 5 bzw. Gebinde 3 bewegen, stehen mit einer Steuerungseinheit S in Verbindung. Die Steuerungseinheit S bewirkt eine aufeinander abgestimmte Bewegung beider Greifvorrichtungen 1 bzw. beider Handhabungseinrichtungen, deren Bestandteil die Greifvorrichtungen 1 sind, so dass beide Greifvorrichtungen 1 selektiv Stückgüter 5 bzw. Gebinde 3 entgegennehmen und aufeinander abgestimmt an die einzelnen zwischen jeweils unmittelbar benachbarten Führungsgeländern 81 ausgebildeten Gassen verteilen können.

Die Greifvorrichtung 1 ist in Fig. 1 somit als Bestandteil eines Verteilsystems 110 ausgebildet. Die Ausführungsform ist lediglich beispielhaft zu verstehen, so dass die Greifvorrichtung 1 auch für weitere Systeme 100, beispielsweise zum Herstellen einer palettierfähigen Lage aus einer Vielzahl an Stückgütern 5 oder eine Vorgruppierung einer palettierfähigen Lage an Stückgütern 5, Verwendung finden kann.

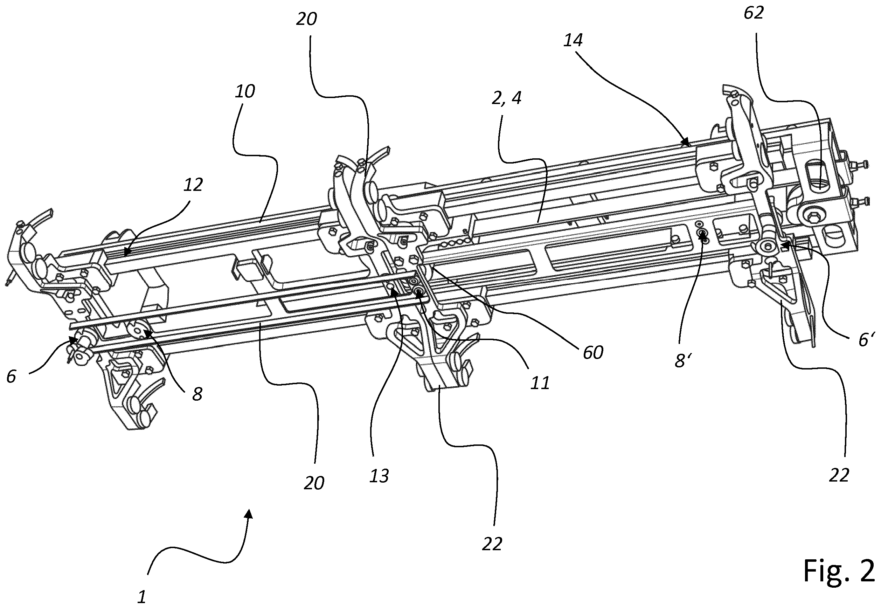

Fig. 2 zeigt eine schematische Perspektivansicht von schräg unten auf eine erste Ausführungsform einer erfindungsgemäßen Greifvorrichtung 1. Die Greifvorrichtung 1 gemäß Ausführungsbeispiel aus Fig. 2 kann für ein System 100 nach Fig. 1 Verwendung finden.

Die Greifvorrichtung 1 besitzt eine Aufhängung 10. Mit der Aufhängung 10 stehen ein erster Schlitten 20 und ein zweiter Schlitten 22 über eine jeweilige Linearführung 12 bzw. 14 in Verbindung. Der erste Schlitten 20 und der zweite Schlitten 22 können somit unter Zuhilfenahme der jeweiligen Linearführung 12 bzw. 14 entlang der Aufhängung 10 bzw. entlang der Längserstreckung der Aufhängung 10 verfahren werden. Die Aufhängung trägt den ersten Schlitten 20 und den zweiten Schlitten 22.

Die Greifvorrichtung 1 umfasst zudem eine erste Greifeinheit 7 und eine zweite Greifeinheit 9 (vgl. Figuren 5 und 6), die aus Gründen der Übersichtlichkeit in den Figuren 2 bis 4 nicht mit dargestellt sind. Sowohl die erste Greifeinheit 7 als auch die zweite Greifeinheit 9 verfügen jeweils über ein erstes Greifmittel 15 und ein zweites Greifmittel 17, welches jeweilige zweite Greifmittel 17 dem jeweiligen ersten Greifmittel 15 gegenüberliegt und mit dem jeweiligen ersten Greifmittel 15 zum Erfassen von Stückgütern 5 zusammenwirkt.

Die schematische Perspektivansicht der Fig. 2 lässt erkennen, dass der erste Schlitten 20 eine vorgegebene Position 11 für ein erstes Greifmittel 15 besitzt. An der vorgegebenen Position 11 wird somit ein erstes Greifmittel 15 angeordnet. Weiter besitzt der erste Schlitten 20 eine erste Befestigungsposition 6 und eine zweite Befestigungsposition 8 für ein weiteres erstes Greifmittel 15. Das weitere erste Greifmittel 15 kann somit selektiv in der ersten Befestigungsposition 6 oder in der zweiten Befestigungsposition 8 am ersten Schlitten 20 angeordnet werden. Die erste Befestigungsposition 6 bzw. die zweite Befestigungsposition 8 kann unter Berücksichtigung eines relativen Abstandes aufeinanderfolgender Stückgüter 5 bzw. eines Teilungsabstandes (vgl. Fig. 1) ausgewählt werden, worauf folgend das weitere erste Greifmittel 15 selektiv in der ersten Befestigungsposition 6 oder in der zweiten Befestigungsposition 8 am ersten Schlitten 20 festgesetzt wird. Es wird hierzu auf Figuren 5 und 6 verwiesen. Eine Zusammenschau dieser Figuren zeigt das jeweilige weitere erste Greifmittel 15, welches in Fig. 5 in der ersten Befestigungsposition 6 am ersten Schlitten 20 festgesetzt ist und in Fig. 6 in der zweiten Befestigungsposition 8 am ersten Schlitten 20 festgesetzt ist. Die ersten Greifmittel 15 besitzen in Figuren 5 und 6 einen unterschiedlichen relativen Abstand zueinander, welcher bei Erfassen und Manipulieren eines jeweiligen Stückgutes 5 bzw. Gebindes 3 beibehalten wird.

Weiter besitzt der zweite Schlitten 22 eine vorgegebene Position 13 für ein zweites Greifmittel 17. An der vorgegebenen Position 13 wird somit ein zweites Greifmittel 17 festgesetzt. Auch der zweite Schlitten 22 besitzt eine erste Befestigungsposition 6' und eine zweite Befestigungsposition 8' für ein weiteres zweites Greifmittel 17. Das weitere zweite Greifmittel 17 kann selektiv in der ersten Befestigungsposition 6' oder in der zweiten Befestigungsposition 8' und ggf. unter Berücksichtigung eines Teilungsabstandes aufeinanderfolgender Stückgüter 5 am zweiten Schlitten 22 angeordnet werden.

An der Aufhängung 10 sind zudem eine Antriebsrolle 60 und eine Umlenkrolle 62 befestigt. Mittels der Antriebsrolle 60 und der Umlenkrolle 62 ist ein bestimmtes und als Riemen 4 ausgebildetes Stellglied 2 umlaufend geführt. Eine Rotationsachse der Antriebsrolle 60 und eine Drehachse der Umlenkrolle 62 verlaufen parallel zueinander. Sowohl der erste Schlitten 20 als auch der zweite Schlitten 22 sind mechanisch an das Stellglied 2 bzw. den Riemen 4 gekoppelt, so dass der erste Schlitten 20 und der zweite Schlitten 22 zum Durchführen einer Zustellbewegung ihrer jeweiligen ersten bzw. zweiten Greifmittel 15 und 17 mittels des Stellglied 2 bzw. mittels des Riemens 4 verfahren werden können. Die Antriebsrolle 60 kann über einen nicht dargestellten Aktor bzw. über eine nicht dargestellte Handhabungseinrichtung rotierend angetrieben werden und hieraus resultierend das Stellglied 2 bzw. den Riemen 4 bewegen.

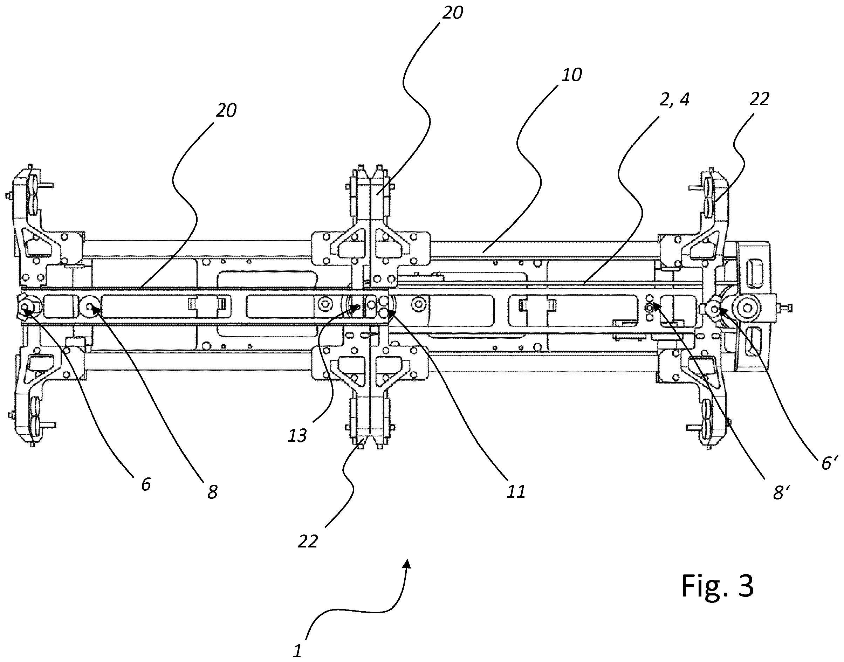

Die Fig. 3 zeigt eine schematische Ansicht von unten auf die Ausführungsform einer Greifvorrichtung 1 aus Fig. 2. In Fig. 2 sind nochmals die vorgegebenen Positionen 11 und 13 des ersten Schlittens 20 und des zweiten Schlittens 22 für das jeweilige erste bzw. zweite Greifmittel 15 und 17 zu erkennen. Weiter lässt Fig. 2 nochmals die ersten Befestigungspositionen 6 und 6' sowie die zweiten Befestigungspositionen 8 und 8' erkennen, an welchen das weitere erste bzw. zweite Greifmittel 15 und 17 festgesetzt werden können. Fig. 3 verdeutlicht zudem eine mögliche Orientierung bzw. Erstreckung für das als Riemen 4 ausgebildete Stellglied 2. Das Stellglied 2 bzw. der Riemen 4 erstreckt sich parallel zur Längsachse der Aufhängung 10 sowie parallel zu einer Bewegungsrichtung des ersten Schlittens 20 und des zweiten Schlittens 22.

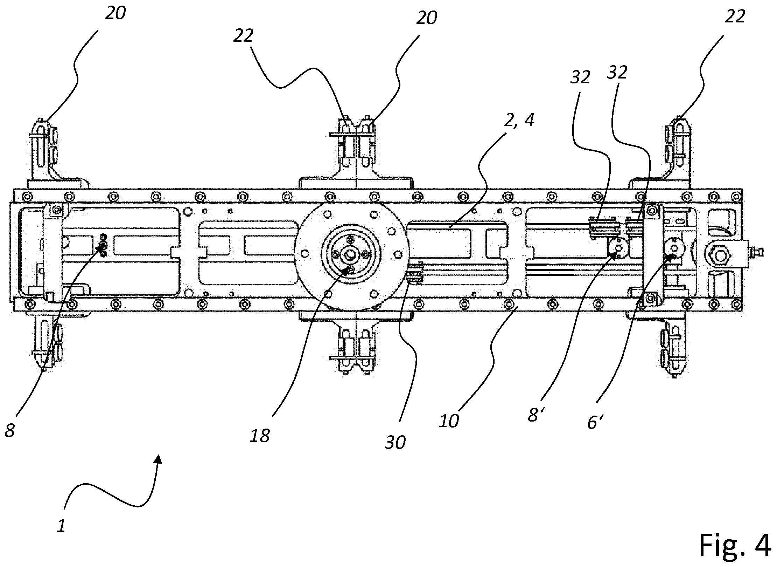

Die Fig. 4 zeigt eine schematische Ansicht von oben auf die Ausführungsform einer Greifvorrichtung 1 aus Figuren 2 und 3. In Fig. 4 ist ein Flanschabschnitt 18 zu erkennen, an welchen ein Aktor bzw. eine Handhabungseinrichtung zur rotierenden Bewegung der Antriebsrolle 60 (vgl. Fig. 2) gekoppelt werden kann. Unter Verweis mit Ziffer 30 zeigt Fig. 4 zudem mit dem Stellglied 2 bzw. dem Riemen 4 in Verbindung stehende Klemmittel, über welche der erste Schlitten 20 am Stellglied 2 bzw. Riemen 4 festgesetzt ist. Weiter sind unter Verweis mit Ziffer 32 zudem Klemmittel dargestellt, über welche der zweite Schlitten 22 am Stellglied 2 bzw. Riemen 4 festgesetzt ist. Die Klemmittel 30, über welche der erste Schlitten 20 am Stellglied 2 bzw. Riemen 4 festgesetzt ist und die Klemmittel 32, über welche der zweite Schlitten 22 am Stellglied 2 bzw. Riemen 4 festgesetzt ist, sind auf gegenüberliegenden Seiten des gemeinsamen Stellgliedes 2 bzw. des gemeinsamen Riemens 4 positioniert. Mittels einer Bewegung des Stellgliedes 2 bzw. des Riemens 4 können daher der erste Schlitten 20 und der zweite Schlitten 22 zeitsynchron verfahren werden. Aus diesem Grunde werden die ersten Greifmittel 15 und die zweiten Greifmittel 17 im Rahmen ihrer Zustellbewegung zeitsynchron bewegt (vgl. Fig. 5).

Die Fig. 5 zeigt eine schematische Seitenansicht auf die Ausführungsform einer Greifvorrichtung 1 aus den Figuren 2 bis 4. In Fig. 5 sind die beiden Greifeinheiten 7 und 9 zu erkennen, die jeweils ein erstes Greifmittel 15 und ein zweites Greifmittel 17 umfassen. Über die Greifeinheiten 7 und 9 bzw. das jeweilige erste und zweite Greifmittel 15 und 17 der jeweiligen Greifeinheit 7 und 9 kann ein Stückgut 5 klemmend entgegengenommen und zeitlich nachfolgend manipuliert werden (vgl. Fig. 1). Das jeweilige erste Greifmittel 15 einer jeweiligen Greifeinheit 7 bzw. 9 ist in Richtung des gegenüberliegenden zweiten Greifmittels 17 einer jeweiligen Greifeinheit 7 bzw. 9 geneigt. Weiter ist das jeweilige zweite Greifmittel 17 einer jeweiligen Greifeinheit 7 bzw. 9 in Richtung des gegenüberliegenden ersten Greifmittels 15 einer jeweiligen Greifeinheit 7 bzw. 9 geneigt. Die ersten Greifmittel 15 sind mechanisch mit dem ersten Schlitten 20 bewegungskoppelt. Die zweiten Greifmittel 17 sind mechanisch mit dem zweiten Schlitten 22 bewegungsgekoppelt. Fig. 5 lässt darüber hinaus erkennen, dass das jeweilige äußere erste bzw. zweite Greifmittel 15 bzw. 17 an der jeweiligen ersten Befestigungsposition 6 bzw. 6' festgesetzt ist.

Die Fig. 6 zeigt eine weitere schematische Seitenansicht auf die Ausführungsform einer Greifvorrichtung 1 aus den Figuren 2 bis 5. Die Komponenten der Greifvorrichtung 1 aus Fig. 6 sind identisch mit den Komponenten der Greifvorrichtung 1 aus Fig. 5 ausgebildet. Gegenüber Fig. 5 ist das jeweilige außenliegende erste Greifmittel 15 bzw. zweite Greifmittel 17 in der zweiten Befestigungsposition 8 bzw. 8' am jeweiligen Schlitten 20 bzw. 22 angeordnet. Eine Zusammenschau der Figuren 5 und 6 verdeutlicht hierbei, dass der jeweilige relative Abstand der ersten Greifmittel 15 zu ihrem jeweiligen gegenüberliegenden zweiten Greifmittel 17 in Fig. 6 gegenüber Fig. 5 geringer ausgebildet ist. Durch die unterschiedlichen ersten Befestigungspositionen 6 und 6' sowie die unterschiedlichen zweiten Befestigungspositionen 8 und 8' des ersten Schlittens 20 und des zweiten Schlittens 22 für das jeweilige außenliegende erste Greifmittel 15 und zweite Greifmittel 17 kann die Greifvorrichtung 1 an unterschiedliche Teilungsabstände aufeinanderfolgender Stückgüter 5 (vgl. Fig. 1) angepasst werden.

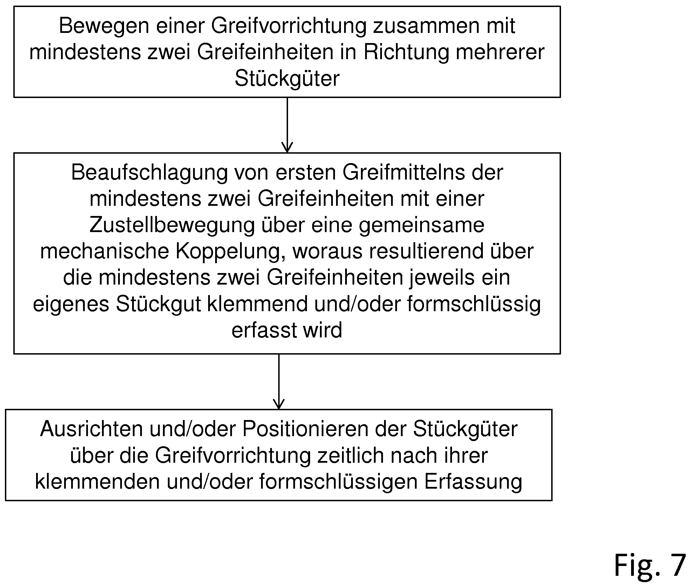

Die Fig. 7 zeigt einzelne Schritte, wie sie bei einer denkbaren Ausführungsform des erfindungsgemäßen Verfahrens vorgesehen sein können. Für das Verfahren gemäß Ausführungsform aus Fig. 7 kann eine Greifvorrichtung 1 nach dem Ausführungsbeispiel aus Figuren 1 bis 6 Verwendung finden.

Für einen ersten Schritt des Verfahrens ist ein Bewegen einer Greifvorrichtung 1 zusammen mit mindestens zwei Greifeinheiten 7 und 9 in Richtung mehrerer Stückgüter 5 vorgesehen. Anschließend werden die ersten Greifmittel 15 der mindestens zwei Greifeinheiten 7 und 9 über eine gemeinsame mechanische Koppelung mit einer Zustellbewegung beaufschlagt, woraus resultierend über die mindestens zwei Greifeinheiten 7 und 9 jeweils ein eigenes Stückgut 5 klemmend und/oder formschlüssig erfasst wird. Nach ihrer klemmenden und/oder formschlüssigen Erfassung werden die Stückgüter 5 über die Greifvorrichtung 1 ausgerichtet und/oder positioniert bzw. manipuliert.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Greifvorrichtung
- 2: Stellglied
- 3: Gebinde
- 4: Riemen
- 5: Stückgut
- 6: Erste Befestigungsposition (Erster Schlitten (20))
- 6': Erste Befestigungsposition (Zweiter Schlitten (22))
- 7: Erste Greifeinheit
- 8: Zweite Befestigungsposition (Erster Schlitten (20))
- 8': Zweite Befestigungsposition (Zweiter Schlitten (22))
- 9: Zweite Greifeinheit
- 10: Aufhängung
- 11: Vorgegebene Position (Erstes Greifmittel 15)
- 12: Linearführung (Erster Schlitten)
- 13: Vorgegebene Position (Zweites Greifmittel 17)
- 14: Linearführung (Zweiter Schlitten)
- 15: Erstes Greifmittel
- 17: Zweites Greifmittel
- 18: Flanschabschnitt
- 20: Erster Schlitten
- 22: Zweiter Schlitten
- 30: Klemmittel (Erster Schlitten 20)
- 32: Klemmittel (Zweiter Schlitten 22)
- 50: Einteiler
- 51: Schubbalken
- 52: Horizontalfördereinrichtung
- 60: Antriebsrolle
- 62: Umlenkrolle
- 70: Manipulationsbereich
- 80: Auslauf
- 81: Führungsgeländer
- 100: System
- 110: Verteilsystem
- S: Steuerungseinheit

## Patentansprüche

1. Greifvorrichtung (1) zum Erfassen mehrerer Stückgüter (5), aufweisend
- mindestens zwei Greifeinheiten (7, 9),
- wobei die mindestens zwei Greifeinheiten (7, 9) jeweils ein erstes Greifmittel (15) und ein dem jeweiligen ersten Greifmittel (15) gegenüberliegendes zweites Greifmittel (17) besitzen, welches jeweilige erste Greifmittel (15) mit dem jeweiligen zweiten Greifmittel (17) zum klemmenden und/oder formschlüssigen Erfassen eines jeweiligen Stückgutes (5) zusammenwirkt, wobei
- die ersten Greifmittel (15) der mindestens zwei Greifeinheiten (7, 9) und die zweiten Greifmittel (17) der mindestens zwei Greifeinheiten (7, 9) für eine gemeinsame Zustellbewegung mechanisch miteinander bewegungskoppelt sind,
- wobei die ersten Greifmittel (15) der mindestens zwei Greifeinheiten (7, 9) an einem gemeinsamen ersten Schlitten (20) festgesetzt sind und wobei die zweiten Greifmittel (17) der mindestens zwei Greifeinheiten (7, 9) an einem gemeinsamen zweiten Schlitten (22) festgesetzt sind, welcher erste Schlitten (20) und welcher zweite Schlitten (22) mit einer Linearführung (12, 14) in Verbindung stehen,
- wobei der erste Schlitten (20) und der zweite Schlitten (22) in Richtung zueinander verfahrbar sind,
und welche Greifvorrichtung (1)
- wenigstens ein insbesondere als Riemen (4) ausgebildetes umlaufend geführtes Stellglied (2) umfasst, an welches der erste Schlitten (20) und der zweite Schlitten (22) für die jeweilige Zustellbewegung mechanisch gekoppelt sind,
die Greifvorrichtung (1) **dadurch gekennzeichnet, dass**
- eine Bewegungsrichtung des ersten Schlittens (20) fluchtend zu einer Bewegungsrichtung des zweiten Schlittens (22) orientiert ist.

2. Greifvorrichtung (1) nach Anspruch 1, umfassend eine Aufhängung (10), an welcher die mindestens zwei Greifeinheiten (7, 9) verfahrbar angeordnet sind.

3. Greifvorrichtung nach Anspruch 1 oder Anspruch 2, umfassend ein bestimmtes insbesondere als Riemen (4) ausgebildetes umlaufend geführtes Stellglied (2), an welches sowohl der erste Schlitten (20) als auch der zweite Schlitten (22) für die jeweilige Zustellbewegung jeweils mechanisch gekoppelt sind.

4. Greifvorrichtung nach einem der Ansprüche 1 bis 3, bei welcher
- die ersten Greifmittel (15) des ersten Schlittens (20) selektiv in wenigstens zwei unterschiedlichen relativen Beabstandungen zueinander am ersten Schlitten (20) festsetzbar sind und/oder bei welcher
- die zweiten Greifmittel (17) des zweiten Schlittens (22) selektiv in wenigstens zwei unterschiedlichen relativen Beabstandungen zueinander am zweiten Schlitten (22) festsetzbar sind.

5. System (100) zum Umgang mit Stückgütern (5), umfassend
- eine Handhabungseinrichtung mit einer Greifvorrichtung (1) gemäß einem der Ansprüche 1 bis 4,
- mindestens eine Transporteinrichtung, mittels welcher eine Vielzahl an Stückgütern (5) einem Arbeitsbereich der Handhabungseinrichtung zuführbar und aus dem Arbeitsbereich der Handhabungseinrichtung bewegbar sind, sowie
- eine Steuerungseinheit (S), über welche die Handhabungseinrichtung zum Erfassen und Manipulieren von Stückgütern (5) unter Zuhilfenahme ihrer Greifvorrichtung (1) ansteuerbar ist.

6. System nach Anspruch 5, bei welcher die Handhabungseinrichtung als Deltakinematik-Roboter ausgebildet ist.

7. Verfahren zum Manipulieren mehrerer Stückgüter (5) über eine Greifvorrichtung (1) mit mindestens zwei Greifeinheiten (7, 9), welche mindestens zwei Greifeinheiten (7, 9) jeweils ein erstes Greifmittel (15) und ein dem jeweiligen ersten Greifmittel (15) gegenüberliegendes zweites Greifmittel (17) besitzen, das Verfahren umfassend folgende Schritte:
- Bewegen der Greifvorrichtung (1) zusammen mit den mindestens zwei Greifeinheiten (7, 9) in Richtung mehrerer Stückgüter (5),
- klemmendes und/oder formschlüssiges Erfassen jeweils wenigstens eines eigenen Stückgutes (5) durch die mindestens zwei Greifeinheiten (7, 9),
- Ausrichten und/oder Positionieren der Stückgüter (5) über die Greifvorrichtung (1) zeitlich nach ihrer klemmenden und/oder formschlüssigen Erfassung, wobei vorgesehen ist, dass
- die ersten Greifmittel (15) über eine gemeinsame erste mechanische Koppelung mit einer Zustellbewegung beaufschlagt werden, woraus resultierend die eigenen Stückgüter (5) durch die mindestens zwei Greifeinheiten (7, 9) klemmend und/oder formschlüssig erfasst werden und wobei
- die zweiten Greifmittel (17) über eine gemeinsame zweite mechanische Koppelung mit einer Zustellbewegung beaufschlagt werden, woraus resultierend die eigenen Stückgüter (5) durch die mindestens zwei Greifeinheiten (7, 9) klemmend und/oder formschlüssig erfasst werden,
- wobei die erste mechanische Koppelung einen ersten Schlitten (20) umfasst und wobei die zweite mechanische Koppelung einen zweiten Schlitten (22) umfasst, wobei der erste Schlitten (20) und der zweite Schlitten (22) zum Ausführen der jeweiligen Zustellbewegung entlang wenigstens einer Linearführung (12, 14) bewegt werden,
- wobei der erste Schlitten (20) und der zweite Schlitten (22) in Richtung zueinander verfahren werden,
und wobei
- der erste Schlitten (20) und der zweite Schlitten (22) an wenigstens einem vorzugsweise als Riemen (4) ausgebildeten umlaufend geführten Stellglied (2) befestigt sind, wobei der erste Schlitten (20) und der zweite Schlitten (22) zum Ausführen der jeweiligen Zustellbewegung über das wenigstens eine vorzugsweise als Riemen (4) ausgebildete Stellglied (2) entlang der wenigstens einen Linearführung (12, 14) bewegt werden,
das Verfahren **dadurch gekennzeichnet, dass**
- eine Bewegungsrichtung des ersten Schlittens (20) fluchtend zu einer Bewegungsrichtung des zweiten Schlittens (22) orientiert ist.

8. Verfahren nach Anspruch 7, bei welchem der erste Schlitten (20) und der zweite Schlitten (22) beim Ausführen der Zustellbewegungen zeitsynchron bewegt werden.

9. Verfahren nach Anspruch 7 oder 8, bei welchem zeitlich vor Bewegen der Greifvorrichtung (1) zusammen mit den mindestens zwei Greifeinheiten (7, 9) in Richtung der mehreren Stückgüter (5)
- eine bestimmte relative Beabstandung aus wenigstens zwei relativen Beabstandungen für die ersten Greifmittel (15) ausgewählt und die ersten Greifmittel (15) in der bestimmten ausgewählten relativen Beabstandung am ersten Schlitten (20) festgesetzt werden, welche bestimmte relative Beabstandung die ersten Greifmittel (15) während des klemmenden und/oder formschlüssigen Erfassens und während des Ausrichtens und Positionierens der Stückgüter (5) beibehalten und/oder bei welchem zeitlich vor Bewegen der Greifvorrichtung (1) zusammen mit den mindestens zwei Greifeinheiten (7, 9) in Richtung der mehreren Stückgüter (5)
- eine bestimmte relative Beabstandung aus wenigstens zwei relativen Beabstandungen für die zweiten Greifmittel (15) ausgewählt und die zweiten Greifmittel (15) in der bestimmten ausgewählten relativen Beabstandung am zweiten Schlitten (22) festgesetzt werden, welche bestimmte relative Beabstandung die zweiten Greifmittel (22) während des klemmenden und/oder formschlüssigen Erfassens und während des Ausrichtens und Positionierens der Stückgüter (5) beibehalten.

## Claims

1. A gripping device (1) used to seize a plurality of piece goods (5), the gripping device (1) comprising
- at least two gripping units (7, 9),
- wherein the at least two gripping units (7, 9) each have a first gripping means (15) and a second gripping means (17) located opposite the particular first gripping means (15), which particular first gripping means (15) interacts with the particular second gripping means (17) in order to seize a particular piece good (5) in a clamping and/or form-locking manner, wherein
- the first gripping means (15) of the at least two gripping units (7, 9) and the second gripping means (17) of the at least two gripping units (7, 9) are mechanically motion-coupled to one another for a common advance movement,
- wherein the first gripping means (15) of the at least two gripping units (7, 9) are fixed to a common first carriage (20), and wherein the second gripping means (17) of the at least two gripping units(7, 9) are fixed to a common second carriage (22), which first carriage (20) and which second carriage (22) are in contact with a linear guide (12, 14),
- wherein the first carriage (20) and the second carriage (22) are movable toward one another,
and which gripping device (1)
- comprises at least one circulatingly guided actuator (2) designed, in particular, as belt (4), to which actuator (2) the first carriage (20) and the second carriage (22) are mechanically coupled for the particular advance movement,
the gripping device (1) being **characterised in that**
- a movement direction of the first carriage (20) is oriented aligned with a movement direction of the second carriage (22).

2. The gripping device (1) according to claim 1, comprising a suspension (10) at which the at least two gripping units (7, 9) are arranged in a movable manner.

3. The gripping device according to claim 1 or claim 2, comprising a specific, circulatingly guided actuator (2) designed, in particular, as belt (4), to which both the first carriage (20) and the second carriage (22) are in each instance mechanically coupled for the particular advance movement.

4. The gripping device according to one of the claims 1 to 3, in which
- the first gripping means (15) of the first carriage (20) are selectively fixable at the first carriage with at least two different relative spacings from one another, and/or in which
- the second gripping means (17) of the second carriage (22) are selectively fixable at the second carriage with at least two different relative spacings from one another.

5. A system (100) used to handle piece goods (5), the system (100) comprising
- a handling apparatus with a gripping device (1) according to one of the claims 1 to 4,
- at least one transport apparatus, by means of which a multitude of piece goods (5) are suppliable to a working range of the handling apparatus and are movable out of the working range of the handling apparatus, as well as
- a control unit (S), by way of which the handling apparatus is controllable to seize and manipulate piece goods (5) with the help of its gripping device (1).

6. The system according to claim 5, in which the handling apparatus is designed as delta kinematic robot.

7. A method used to manipulate a plurality of piece goods (5) by way of a gripping device (1) with at least two gripping units (7, 9), which at least two gripping units (7, 9) each have a first gripping means (15) and a second gripping means (17) located opposite the particular first gripping means (15), the method comprising the following steps:
- moving the gripping device (1) together with the at least two gripping units (7, 9) toward a plurality of piece goods (5),
- seizing in each instance at least one own piece good (5) in a clamping and/or form-locking manner by the at least two gripping units (7, 9)
- aligning and/or positioning the piece goods (5) by way of the gripping device (1) temporally after they have been seized in a clamping and/or form-locking manner, wherein it is provided that
- an advance movement is applied onto the first gripping means (15) by way of a common first mechanical coupling, with the result that the own piece goods (5) are seized by the at least two gripping units (7, 9) in a clamping and/or form-locking manner, and wherein
- an advance movement is applied onto the second gripping means (17) by way of a common second mechanical coupling, with the result that the own piece goods (5) are seized by the at least two gripping units (7, 9) in a clamping and/or form-locking manner,
- wherein the first mechanical coupling comprises a first carriage (20), and wherein the second mechanical coupling comprises a second carriage (22), wherein the first carriage (20) and the second carriage (22) are moved along at least one linear guide (12, 14) in order to carry out the particular advance movement,
- wherein the first carriage (20) and the second carriage (22) are moved toward one another,
and wherein
- the first carriage (20) and the second carriage (22) are fastened to at least one circulatingly guided actuator (2) preferably designed as belt (4), wherein the first carriage (20) and the second carriage (22) are moved along the at least one linear guide (12, 14) by way of the at least one actuator (2) preferably designed as belt (4) in order to carry out the particular advance movement,
the method being **characterised in that**
- a movement direction of the first carriage (20) is oriented aligned with a movement direction of the second carriage (22).

8. The method according to claim 7, in which the first carriage (20) and the second carriage (22) are moved time-synchronously during the carrying out of the advance movements.

9. The method according to claim 7 or 8, in which, temporally before the gripping device (1) is moved together with the at least two gripping units (7, 9) toward a plurality of piece goods (5),
- a specific relative spacing is selected from at least two relative spacings for the first gripping means (15), and the first gripping means (15) are fixed at the first carriage (20) in the specific selected relative spacing, which specific relative spacing is maintained by the first gripping means (15) during the seizing in a clamping and/or form-locking manner and during the aligning and positioning of the piece goods (5), and/or in which method, temporally before the gripping device (1) is moved together with the at least two gripping units (7, 9) toward a plurality of piece goods (5),
- a specific relative spacing is selected from at least two relative spacings for the second gripping means (17), and the second gripping means (17) are fixed at the second carriage (22) in the specific selected relative spacing, which specific relative spacing is maintained by the second gripping means (17) during the seizing in a clamping and/or form-locking manner and during the aligning and positioning of the piece goods (5).

## Revendications

1. Dispositif de préhension (1) destiné à saisir plusieurs produits de détail (5), comprenant
- au moins deux unités de préhension (7, 9),
- dans lequel lesdites au moins deux unités de préhension (7, 9) possèdent chacune un premier moyen de préhension (15) et un deuxième moyen de préhension (17) qui est opposé au premier moyen de préhension (15) respectif, lequel premier moyen de préhension (15) respectif agit de concert avec le deuxième moyen de préhension (17) respectif pour saisir par serrage et/ou à engagement positif un produit de détail (5) respectif, dans lequel
- les premiers moyens de préhension (15) desdites au moins deux unités de préhension (7, 9) et les deuxièmes moyens de préhension (17) desdites au moins deux unités de préhension (7, 9) sont couplés mécaniquement en mouvement les uns aux autres pour un mouvement d'avance commun,
- dans lequel les premiers moyens de préhension (15) desdites au moins deux unités de préhension (7, 9) sont fixés sur un premier chariot (20) commun et dans lequel les deuxièmes moyens de préhension (17) desdites au moins deux unités de préhension (7, 9) sont fixés à un deuxième chariot (22) commun, lequel premier chariot (20) et lequel deuxième chariot (22) sont reliés à un guidage linéaire (12, 14),
- dans lequel le premier chariot (20) et le deuxième chariot (22) sont déplaçables l'un vers l'autre,
et lequel dispositif de préhension (1)
- comprend au moins un actionneur (2) qui est conçu en particulier en tant que courroie (4) et est mené en circulation et auquel le premier chariot (20) et le deuxième chariot (22) sont couplés mécaniquement pour le mouvement d'avance respectif,
le dispositif de préhension (1) étant **caractérisé par le fait qu'**
- une direction de déplacement du premier chariot (20) est orientée de manière à être dans l'alignement d'une direction de déplacement du deuxième chariot (22).

2. Dispositif de préhension (1) selon la revendication 1, comprenant une suspension (10) sur laquelle lesdites au moins deux unités de préhension (7, 9) sont agencées de manière déplaçable.

3. Dispositif de préhension selon la revendication 1 ou la revendication 2, comprenant un certain actionneur (2) qui est conçu en particulier en tant que courroie (4) et est mené en circulation et auquel aussi bien le premier chariot (20) que le deuxième chariot (22) sont couplés chacun mécaniquement pour le mouvement d'avance respectif.

4. Dispositif de préhension selon l'une quelconque des revendications 1 à 3, dans lequel
- les premiers moyens de préhension (15) du premier chariot (20) peuvent être fixés sélectivement à au moins deux écartements relatifs différents l'un de l'autre sur le premier chariot (20), et/ou dans lequel
- les deuxièmes moyens de préhension (17) du deuxième chariot (20) peuvent être fixés sélectivement à au moins deux écartements relatifs différents l'un de l'autre sur le deuxième chariot (20).

5. Système (100) de manipulation de produits de détail (5), comprenant
- un dispositif de manipulation comprenant un dispositif de préhension (1) selon l'une quelconque des revendications 1 à 4,
- au moins un dispositif de transport au moyen duquel une pluralité de produits de détail (5) peut être amenée à une zone de travail du dispositif de manipulation et peut être déplacée hors de la zone de travail du dispositif de manipulation, et
- une unité de commande (S) par l'intermédiaire de laquelle le dispositif de manipulation peut être commandé pour saisir et manipuler des produits de détail (5) à l'aide de son dispositif de préhension (1).

6. Système selon la revendication 5, dans lequel le dispositif de manipulation est conçu en tant que robot delta cinématique.

7. Procédé de manipulation de plusieurs produits de détail (5) par l'intermédiaire d'un dispositif de préhension (1) comprenant au moins deux unités de préhension (7, 9), lesquelles au moins deux unités de préhension (7, 9) possèdent chacune un premier moyen de préhension (15) et un deuxième moyen de préhension (17) qui est opposé au premier moyen de préhension (15) respectif, le procédé comprenant les étapes suivantes consistant à:
- déplacer le dispositif de préhension (1) conjointement avec lesdites au moins deux unités de préhension (7, 9) en direction de plusieurs produits de détail (5),
- saisir par serrage et/ou à engagement positif respectivement au moins un propre produit de détail (5) par lesdites au moins deux unités de préhension (7, 9),
- aligner et/ou positionner les produits de détail (5) par l'intermédiaire du dispositif de préhension (1) après qu'ils ont été saisis par serrage et/ou à engagement positif, dans lequel il est prévu que
- les premiers moyens de préhension (15) sont soumis à un mouvement d'avance par un premier couplage mécanique commun d'où résulte que les propres produits de détail (5) sont saisis par serrage et/ou à engagement positif par lesdites au moins deux unités de préhension (7, 9), et dans lequel
- les deuxièmes moyens de préhension (17) sont soumis à un mouvement d'avance par un deuxième couplage mécanique commun d'où résulte que les propres produits de détail (5) sont saisis par serrage et/ou à engagement positif par lesdites au moins deux unités de préhension (7, 9),
- dans lequel le premier couplage mécanique comprend un premier chariot (20) et dans lequel le deuxième couplage mécanique comprend un deuxième chariot (22), dans lequel le premier chariot (20) et le deuxième chariot (22) sont déplacés le long d'au moins un guide linéaire (12, 14) pour exécuter le mouvement d'avance respectif,
- dans lequel le premier chariot (20) et le deuxième chariot (22) sont déplacés l'un vers l'autre,
et dans lequel
- le premier chariot (20) et le deuxième chariot (22) sont fixés à au moins un actionneur (2) qui est conçu de préférence en tant que courroie (4) et est mené en circulation, dans lequel le premier chariot (20) et le deuxième chariot (22) sont déplacés le long dudit au moins un guide linéaire (12, 14), par le biais dudit au moins un actionneur (2) conçu de préférence en tant que courroie (4), pour exécuter le mouvement d'avance respectif,
ledit procédé étant **caractérisé par le fait qu'**
- une direction de déplacement du premier chariot (20) est orientée de manière à être dans l'alignement d'une direction de déplacement du deuxième chariot (22).

8. Procédé selon la revendication 7, dans lequel le premier chariot (20) et le deuxième chariot (22) sont déplacés en synchronisme temporel lors de l'exécution des mouvements d'avance.

9. Procédé selon la revendication 7 ou 8, dans lequel, avant de déplacer le dispositif de préhension (1) conjointement avec lesdites au moins deux unités de préhension (7, 9) en direction de la pluralité de produits de détail (5),
- on choisit un écartement relatif déterminé parmi au moins deux écartements relatifs pour les premiers moyens de préhension (15), et les premiers moyens de préhension (15) sont fixés à l'écartement relatif déterminé choisi sur le premier chariot (20), lequel écartement relatif déterminé est maintenu par les premiers moyens de préhension (15) pendant la préhension par serrage et/ou à engagement positif et durant l'alignement et le positionnement des produits de détail (5), et/ou dans lequel, avant de déplacer le dispositif de préhension (1) conjointement avec lesdites au moins deux unités de préhension (7, 9) en direction de la pluralité de produits de détail (5),
- on choisit un écartement relatif déterminé parmi au moins deux écartements relatifs pour les deuxièmes moyens de préhension (17), et les deuxièmes moyens de préhension (17) sont fixés à l'écartement relatif déterminé choisi sur le deuxième chariot (22), lequel écartement relatif déterminé est maintenu par les deuxièmes moyens de préhension (17) pendant la préhension par serrage et/ou à engagement positif et durant l'alignement et le positionnement des produits de détail (5).
